# FASCICULE DE BREVET EUROPEEN

(11) **EP 0 721 862 B1**
(45) Date de publication et mention de la délivrance du brevet: **14.10.1998**
(21) Numéro de dépôt: 96400036.8
(22) Date de dépôt: 08.01.1996
(51) Int. Cl.: B60R 13/06, B60J 10/00

(54) **Procédé de fabrication d'un élément d'étanchéité comportant un joint élastique et une bande telle qu'une bande adhésive**
Verfahren zum Herstellen eines Dichtungselementes mit gummielastischer Dichtung und ein Band wie eine Klebstoffband
Method for producing a sealing element comprising an elastic sealing and a strip such as an adhesive strip

(30) Priorité: 16.01.1995 FR 9500394
(43) Date de publication de la demande: 17.07.1996
(73) Titulaire: HUTCHINSON GmbH, 52003 Aachen (DE)
(72) Inventeur: Schmidt, Wolfgang, D-52152 Simmerath (DE)
(74) Mandataire: Jacquard, Philippe Jean-Luc

(56) Documents cités:
- EP-A- 0 372 745
- DE-A- 3 628 469
- DE-A- 3 926 509
- FR-A- 2 133 107
- GB-A- 2 062 733

## Description

La présente invention a pour objet un procédé de fabrication d'un élément d'étanchéité comportant un joint élastique en un premier matériau, présentant une région recouverte d'une bande comportant un deuxième matériau différent du premier matériau, le deuxième matériau présentant une température de dégradation inférieure à la température à laquelle un traitement du premier matériau doit être effectué pour lui conférer une forme permanente dans une zone formant une courbe.

On connaît, dans le domaine de la construction automobile, des joints élastiques de portières des véhicules et destinés à assurer l'étanchéité de celles-ci, à l'eau, à la poussière, ainsi qu'au bruit et qui sont montés soit sur le contour de la carrosserie, soit sur la porte elle-même. Pour certains types de joints, il est prévu de munir le joint d'une bande adhésive double-face qui est fixée sur le joint et qui permet à son tour une fixation du joint sur la portière ou sur la carrosserie.

Les procédés connus de fabrication de tels joints mettent en oeuvre une étape de moulage par injection qui permet de conférer au joint une forme qui suit le contour de la portière du véhicule. Ces joints sont donc fabriqués à partir de pièces de forme qui sont vulcanisées pour obtenir le contour désiré. Etant donné que les matériaux qui constituent les bandes adhésives double-face, à savoir celui du support qui les constitue (en général une mousse acrylique) et/ou les revêtements de colle ne sont pas susceptibles de supporter les températures de vulcanisation du joint sans dégradation, on est obligé de mettre en place la bande adhésive après la mise en forme du joint élastique, ce qui implique une étape supplémentaire qui est coûteuse puisqu'elle doit être réalisée sur un joint déjà découpé à la longueur et préformé.

La présente invention a pour objet un procédé de fabrication d'un élément d'étanchéité comportant un joint élastique et une bande telle qu'une bande adhésive double-face, et qui permette la mise en place de cette bande avant toute opération de mise en forme du joint, et de préférence avant toute opération de découpe du joint s'il est fabriqué en continu, en particulier par extrusion.

L'invention concerne ainsi un procédé de fabrication d'un élément d'étanchéité comportant un joint élastique en un premier matériau et une bande recouvrant une région dudit joint, ladite bande comportant un deuxième matériau différent du premier matériau, le deuxième matériau présentant une température de dégradation inférieure à la température à laquelle un traitement du premier matériau doit être effectué pour conférer au joint élastique une forme permanente au moins dans une zone formant une courbe caractérisé en ce qu'il comporte les étapes suivantes :
- a) disposer ladite bande sur ladite région du joint élastique,
- b) déformer de manière permanente ladite zone formant une courbe par chauffage du joint élastique dans ladite zone pendant une durée déterminée, tout en refroidissant localement ladite bande de manière à la maintenir en dessous de sa température de dégradation.

Il est avantageux que le joint élastique soit fabriqué par extrusion et le procédé comporte alors, entre l'étape a et l'étape b, une étape intermédiaire a' de découpe de l'élément d'étanchéité à une longueur donnée. En d'autres termes, ladite bande peut être ainsi déposée en continu sur le joint élastique qui est fabriqué par extrusion et qui, en particulier, peut être soumis, de manière connue en soi, à une étape de vulcanisation suivie d'un refroidissement, ladite pose de la bande pouvant alors intervenir après cette étape de refroidissement du joint extrudé et vulcanisé.

Le premier matériau est de préférence un élastomère réticulé tel que l'EPDM, vulcanisé avant l'étape a.

Dans le cas d'un joint de portière d'automobile, le joint élastique est en général un joint tubulaire, et dans ce cas, il est avantageux, selon un mode de réalisation de l'invention, que, lors de l'étape b, l'intérieur du joint tubulaire soit mis en pression de manière à éviter un aplatissement du joint tubulaire dans ladite zone formant une courbe. Cette mise en pression permet aux contours extérieurs du joint tubulaire de se rapprocher du dispositif de chauffage ou de se plaquer contre lui, ce qui améliore en outre les échanges thermiques.

Les joints de portières automobile comportent en général une lèvre qui forme un prolongement par rapport à la région centrale du joint élastique qui est, dans le cas d'espèce, tubulaire, mais qui, suivant l'invention pourrait avoir tout autre forme appropriée. Dans le cas d'un joint élastique à lèvre, il est avantageux que, lors de l'étape b, le joint soit maintenu par ladite lèvre dans un dispositif effectuant ledit refroidissement local de la bande, ledit maintien étant de préférence obtenu en écartant la lèvre du reste du joint élastique dans ladite zone formant une courbe, ce qui permet en particulier une meilleure séparation thermique entre la lèvre recouverte de la bande adhésive. L'ensemble constitué de la lèvre et de la bande rapportée sur celle-ci présente un profil allongé formant une ailette favorable au refroidissement, alors que la région centrale du joint élastique, par exemple de forme tubulaire, est plus massive et présente une inertie thermique nettement plus importante.

Selon un mode de réalisation de l'invention, il peut être également prévu qu'après l'étape b, une étape de refroidissement, notamment par air soit réalisée.

L'invention concerne également un dispositif pour la mise en oeuvre du procédé tel que défini ci-dessus caractérisé en ce qu'il comporte :
- une paire de mâchoires chauffantes permettant de conformer selon une courbe, une zone d'un joint élastique, et de lui conférer une déformation permanente par chauffage pendant une durée déterminée,
- un dispositif de refroidissement en contact thermique avec une bande dont est revêtue une région du joint élastique, et propre à maintenir cette bande à une température inférieure à sa température de dégradation.

Selon une variante, le joint élastique est un joint tubulaire et le dispositif comporte un moyen pour mettre l'intérieur du joint élastique sous pression de manière à plaquer, dans ladite zone, l'extérieur du joint élastique contre les parois intérieures des mâchoires chauffantes.

Selon un mode de réalisation préféré correspondant au cas où le joint comporte une lèvre, le dispositif de refroidissement comporte deux pièces plaquées l'une contre l'autre et dont l'une comporte un circuit de refroidissement jouxtant la bande et dont l'autre comporte un prolongement venant se loger entre la lèvre et le reste de ladite zone du joint élastique.

Selon un mode de réalisation de l'invention, le dispositif peut comporter un moyen pour faire circuler un fluide de refroidissement propre à assurer un refroidissement du joint postérieurement à l'action des mâchoires chauffantes.

D'autres caractéristiques et avantages de l'invention apparaîtront mieux à la lecture de la description qui va suivre, en liaison avec les dessins annexés dans lesquels :
- les figures 1a et 1b représentent respectivement en vue de dessus et en vue latérale un dispositif préféré pour la mise en oeuvre du procédé selon l'invention ;
- les figures 2a et 2b représentent respectivement en coupe, un élément d'étanchéité comportant un joint élastique tubulaire à lèvre, la lèvre étant recouverte d'une bande adhésive double-face, et la figure 2b représentant schématiquement un joint d'étanchéité conformé selon le contour d'une portière d'automobile,
- la figure 3 représente la mise en oeuvre préférée de l'étape b de l'invention,
- et la figure 4 représente une mise en oeuvre préférée de l'étape c de l'invention.

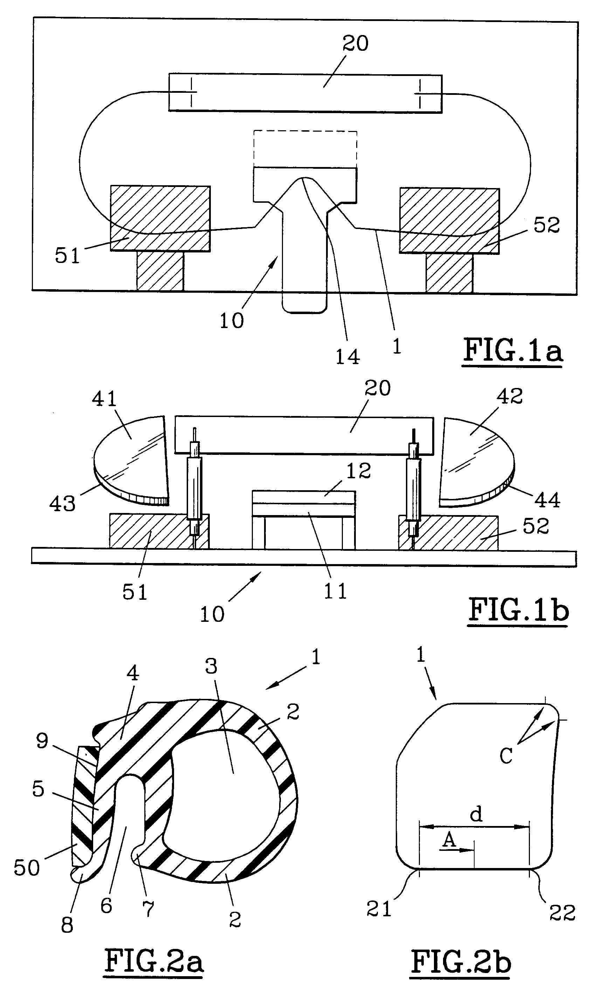

Selon les figures 1a et 1b, une installation pour la mise en oeuvre du procédé selon l'invention comporte une installation de chauffage 10 présentant deux mâchoires chauffantes 11 et 12, fonctionnant par exemple par chauffage électrique et permettant de chauffer pendant une durée déterminée une zone 14 d'un joint élastique 1, cette zone formant une courbe dont le contour est fixé par la forme de canaux complémentaires des mâchoires 11 et 12 qui viennent ensérer le joint dans sa région centrale qui peut être, comme dans l'exemple de la figure 2a, une région tubulaire 2 pourvue d'une ouverture centrale 3. L'installation comporte également deux pièces 41 et 42 comportant des contours extérieurs 43, 44 formant un gabarit de montage de l'élément d'étanchéite prédécoupé dont les extrémités s'engagent dans une installation 20 de perçage destinée à percer les deux trous d'évacuation d'eau 21 et 22 en bas de portière comme représenté à la figure 2b.

Le dispositif 10 pourvu des mâchoires chauffantes 11 et 12 permet de déformer de manière permanente l'élément d'étanchéité 1 dans une zone 14 correspondant à l'arc de cercle représenté par C à la figure 2b et correspondant au coin supérieur arrière d'une portière avant d'un véhicule. On comprendra bien entendu que selon l'invention, le procédé peut être mis en oeuvre pour réaliser simultanément ou successivement la déformation de plusieurs zones telles que 14.

Le dispositif selon l'invention comporte également un ou plusieurs dispositifs de refroidissement 51, 52 par exemple des dispositifs de refroidissement par air, permettant un refroidissement progressif et contrôlé après l'opération de déformation permanente réalisée dans l'installation 10.

Dans l'exemple représenté, deux dispositifs de refroidissement 51 et 52 sont disposés symétriquement de part et d'autre des dispositifs de chauffage 10 de manière à tenir compte de la dissymétrie entre les joints de portière droite, auxquels correspond le dispositif de refroidissement 51, et aux joints de portière gauche, auxquels correspond le dispositif de refroidissement 52.

Les étapes de chauffage et de refroidissement selon l'invention seront maintenant expliqués plus avant dans un mode de réalisation préféré correspondant au cas d'un joint tubulaire 1 à lèvre équipé d'une bande adhésive double face 50 formant l'élément d'étanchéité représenté à la figure 2a. Dans celui-ci, une zone 4 forme jonction entre le corps central tubulaire 2 et la lèvre 5 sur la surface extérieure 9 de laquelle est collé un côté de l'adhésif double face 50. La lèvre 5 présente une extrémité 8 qui est recourbée vers l'extérieur et à la naissance de laquelle fait face un bourrelet d'étanchéité 7 disposé à l'entrée de l'espace 6 qui sépare la lèvre 5 du corps tubulaire central 2. On rappellera que, lors du montage dans une portière d'automobile, un profil métallique de la porte est introduit dans l'espace 6, l'élément d'étanchéité étant collé à la portière par l'autre côté de l'adhésif double-face 50.

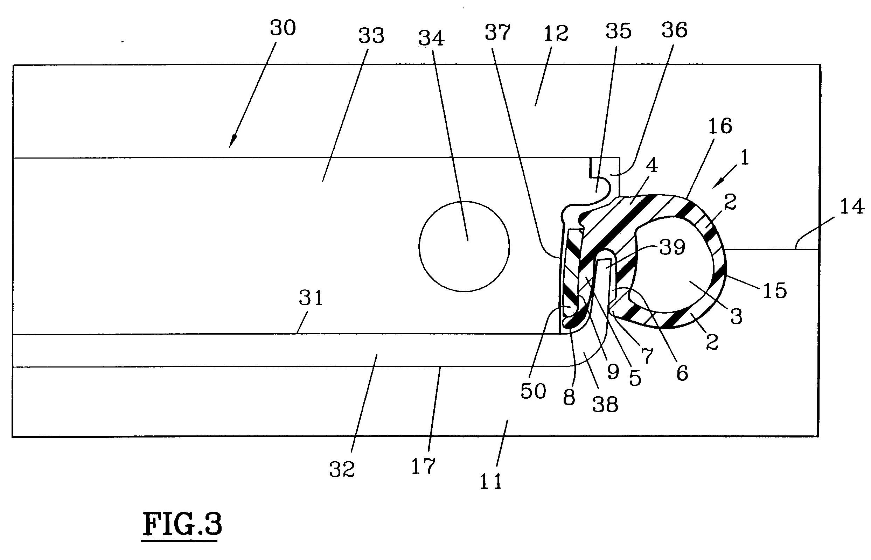

Selon la figure 3, le dispositif 10 comporte deux mâchoires complémentaires respectivement inférieure 11 et supérieure 12 qui viennent s'appliquer l'une contre l'autre sur une face plane 14 et qui viennent ensérer le corps central 2 du joint tubulaire 1. La lèvre 5 et la bande adhésive 50 sont emprisonnées dans le dispositif de refroidissement 30 lequel comporte une pièce principale 33 pourvue d'une ouverture 34 destinée à la circulation d'eau de refroidissement et qui longe un bord 37 courbe qui est en contact avec la bande adhésive 50 laquelle est bien entendu à ce stade revêtue d'une pellicule de protection. Le bord 37 se prolonge vers le haut sur le dessin par une protubérance 35 s'étendant en direction de la région de transition 4 du joint 1 pour définir une butée mécanique. Une contre-pièce 32 portant par la face plane 31 sur la pièce principale 33 présente un profil 39 raccordé à angle droit en 38 et qui vient se loger dans l'espace 6 situé entre la lèvre 5 et le corps 2 du joint. De cette façon, l'élément d'étanchéité 1 est maintenu mécaniquement dans le dispositif de refroidissement 30 et d'autre part la lèvre 5 est écartée du corps 2 du joint.

Lors de l'étape de chauffage conduisant à l'obtention d'une déformation permanente à la région de courbe 14, par exemple à 250°C pendant 4 minutes pour un joint en EPDM pré-vulcanisé, la circulation d'eau dans l'ouverture 34 permet de refroidir localement la bande 50 et éventuellement la lèvre 5 laquelle, par sa forme d'ailette est propice aux échanges thermiques. D'autre part, l'écartement procuré par le profil 39 de la pièce 32, laquelle est de préférence en matériau thermiquement isolant, permet de découpler thermiquement le corps 2 du joint élastique qui est chauffé et la bande 50 qui est refroidie.

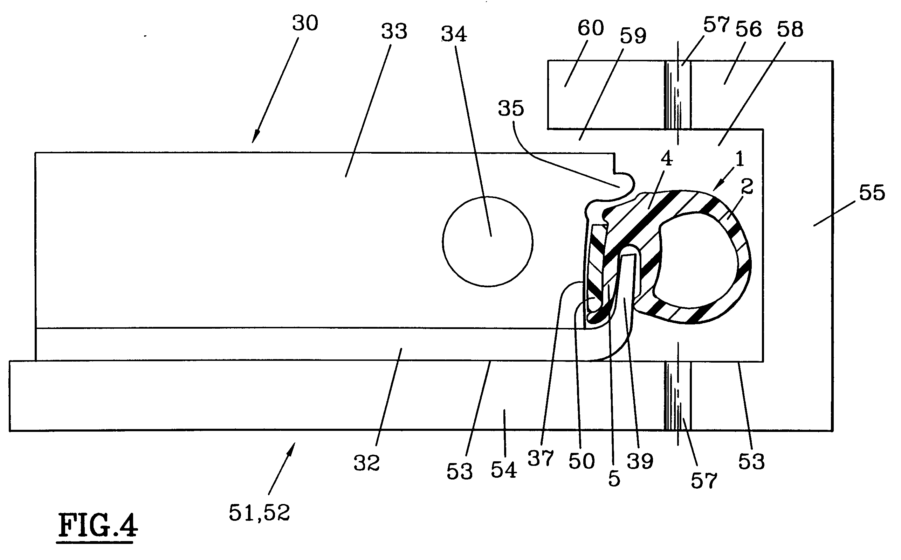

La figure 4 correspond à l'étape ultérieure c au cours de laquelle le corps 2 du joint qui était chauffé lors de l'étape précédente est refroidi par air par exemple pendant une minute par circulation d'air à 20°C. L'élément d'étanchéité 1 reste dans cette étape emprisonné dans le dispositif de refroidissement 30 dans lequel on continue à faire circuler de l'eau dans le conduit 34, dans la mesure où il est besoin d'éviter une augmentation de température intempestive de la lèvre 5 qui pourrait se communiquer à la bande 50.

Au cours de cette étape de refroidissement, le corps 2 du joint élastique est disposé dans un espace 58 alimenté en air de refroidissement par des ouvertures 57, compartiment 58 présentant dans sa partie supérieure sur le dessin une fente horizontale 59 permettant l'évacuation de l'air et donc une circulation propice au refroidissement. Plus particulièrement, le dispositif de refroidissement 51, 52 présente une région de base 54 dans laquelle sont ménagées une ou plusieurs ouvertures 57, et une paroi verticale 55 perpendiculaire à la précédente qui se prolonge vers l'intérieur par une paroi supérieure 56 dans laquelle sont ménagées également une ou plusieurs ouvertures d'alimentation 57 et dont l'extrémité 60 vient surplomber la face supérieure de la pièce 33 en laissant subsister la fente 59 précitée.

Au cours de l'étape de chauffage représentée à la figure 3, et selon un mode préféré, on insuffle de l'air sous pression dans l'ouverture tubulaire 3 du corps 2 du joint élastique 1 de manière à compenser l'aplatissement de celui-ci résultant de sa conformation pour une région courbée telle que la courbe 14. En outre, dans le cas où le chauffage s'effectue par des mâchoires enserrant étroitement le corps 2 du joint, cette pression permet d'appliquer la face externe de celui-ci contre les profils complémentaires respectivement 15 et 16 des mâchoires 11 et 12, ce qui améliore les échanges thermiques.

En outre, cette mise sous pression pourrait avantageusement s'accompagner de circulation d'air chaud dans l'ouverture 3, favorable à la mise en température homogène du corps 2.

On va maintenant décrire, à titre d'exemple, un procédé de fabrication d'un élément élastique 1 comportant un joint élastique en élastomère EPDM par exemple en caoutchouc mou ou en caoutchouc tendre, et comportant une bande adhésive 50.

Dans une première étape, le joint élastique 2, 4, 5 est extrudé puis vulcanisé en continu par exemple par UHF, puis est refroidi et, toujours en continu, la bande adhésive 50 est collée sur la face externe 9 de la lèvre 5.

Dans une étape ultérieure et après refroidissement complet, l'élément d'étanchéité est découpé à la longueur désirée dans une machine automatique connue en soi.

Ensuite, l'élément d'étanchéité 1 est monté en boucle sur la machine représentée aux figures 1a et 1b, les extrémités libres s'engageant dans le dispositif de percement 20. On réalise tout d'abord l'étape de chauffage selon la procédure décrite en rapport avec la figure 3. Pendant cette étape de chauffage, on réalise le percement des ouvertures d'évacuation d'eau 21 et 22 qui, l'élément d'étanchéité une fois monté sur la portière, sont situées sur le bord inférieur de celle-ci.

Ensuite, l'élément d'étanchéité (1, 50) qui est toujours emprisonné dans le dispositif 30 au niveau de la courbe 14 à confectionner, est déplacé vers l'une des installations 51 et 52 en vue de réaliser l'étape de refroidissement décrite en rapport avec la figure 4.

Le procédé décrit ci-dessus concernait le cas d'un joint pré-vulcanisé. L'invention s'applique également au cas de joints non encore vulcanisés, par exemple de joints composites, dans lesquels seule la région de corps 2 nécessite une vulcanisation, alors que la lèvre 5 est en un matériau différent ne nécessitant pas de vulcanisation. La vulcanisation de la région 2 s'effectue alors au cours de l'étape b.

## Revendications

1. Procédé de fabrication d'un élément d'étanchéité comportant un joint élastique (1) en un premier matériau et une bande (50) recouvrant une région dudit joint, ladite bande (50) comportant un deuxième matériau différent du premier matériau, le deuxième matériau présentant une température de dégradation inférieure à la température à laquelle un traitement du premier matériau doit être effectué pour conférer au joint élastique (1) une forme permanente au moins dans une zone formant une courbe caractérisé en ce qu'il comporte les étapes suivantes :
a) disposer ladite bande (50) sur ladite région (5) du joint élastique (1),
b) déformer de manière permanente ladite zone formant une courbe (14) par chauffage du joint élastique (1) dans ladite zone pendant une durée déterminée, tout en refroidissant localement ladite bande (50) de manière à la maintenir en dessous de sa température de dégradation.

2. Procédé selon la revendication 1 caractérisé en ce que le joint élastique (1) est fabriqué par extrusion et en ce qu'il comporte, entre l'étape a et l'étape b, une étape intermédiaire a', de découpe de l'élément d'étanchéité (50) à une longueur donnée.

3. Procédé selon une des revendications 1 ou 2 caractérisé en ce que ledit premier matériau est un élastomère réticulé, tel que l'EPDM, vulcanisé avant l'étape a.

4. Procédé selon une des revendications 1 à 3 caractérisé en ce que la bande (50) est une bande adhésive double face.

5. Procédé selon une des revendications précédentes caractérisé en ce que le joint élastique (1) est un joint tubulaire.

6. Procédé selon la revendication 5 caractérisé en ce que, lors de l'étape b, l'intérieur (3) du joint tubulaire (1) est mis en pression de manière à éviter un aplatissement du joint tubulaire (1) dans ladite zone formant une courbe (14).

7. Procédé selon une des revendications précédentes caractérisé en ce que ladite région du joint élastique (1) est une lèvre (5).

8. Procédé selon la revendication 7 caractérisé en ce que, lors de l'étape b, le joint (1) est maintenu par ladite lèvre (5) dans un dispositif effectuant ledit refroidissement local de la bande (50).

9. Procédé selon la revendication 8 caractérisé en ce que ledit maintien est obtenu en écartant la lèvre (5) du reste du joint élastique (1) dans ladite zone formant une courbe (14).

10. Procédé selon l'une des revendications précédentes caractérisé en ce qu'il comporte, après l'étape b, une étape c de refroidissement du joint (1) par circulation d'un fluide.

11. Dispositif pour la mise en oeuvre du procédé selon une des revendications précédentes caractérisé en ce qu'il comporte :
- une paire de mâchoires chauffantes (11, 12) permettant de conformer selon une courbe, une zone (14) d'un joint élastique (1), et de lui conférer une déformation permanente par chauffage pendant une durée déterminée,
- un dispositif de refroidissement (30) en contact thermique avec une bande (50) dont est revêtue une région (5) du joint élastique (1), et propre à maintenir cette bande (50) à une température inférieure à sa température de dégradation.

12. Dispositif selon la revendication 11 caractérisé en ce que le joint élastique (1) est un joint tubulaire et en ce qu'il comporte un moyen pour mettre l'intérieur (3) du joint élastique (1) sous pression de manière à plaquer, dans ladite zone, l'extérieur du joint élastique (1) contre les parois intérieures des mâchoires chauffantes (11, 12).

13. Dispositif selon une des revendications 11 ou 12 caractérisé en ce que le joint (1) comporte une lèvre (5) et en ce que le dispositif de refroidissement comporte deux pièces (32, 33) plaquées l'une contre l'autre, dont l'une comporte un circuit de refroidissement (34) jouxtant la bande (50) et dont l'autre comporte un prolongement (39) venant se loger entre la lèvre (5) et le reste de ladite zone (14) du joint élastique (1).

14. Dispositif selon une des revendications 11 à 13 caractérisé en ce qu'il comporte un moyen pour faire circuler un fluide de refroidissement propre à assurer un refroidissement du joint (1) postérieurement à l'action des mâchoires chauffantes (11, 12).

## Claims

1. Process for producing a sealing element comprising an elastic joint (1) of a first material and a strip (50) covering a region of said joint, said strip (50) comprising a second material different from the first material, the second material having a degradation temperature below the temperature at which the first material has to be treated in order to impart a permanent shape to the elastic joint (1) at least in a zone forming a curve, characterised in that it comprises the following steps:
a) placing said strip (50) on said region (5) of the elastic joint (1),
b) permanently deforming said zone forming a curve (14) by heating the elastic joint (1) in said zone for a specified period, while cooling said strip (50) locally so as to keep it below its degradation temperature.

2. Process according to claim 1, characterised in that the elastic joint (1) is produced by extrusion and in that it comprises, between step a and step b, an intermediate step a' of cutting the sealing element (50) to a given length.

3. Process according to one of claims 1 or 2, characterised in that said first material is a cross-linked elastomer such as EPDM vulcanised before step a.

4. Process according to one of claims 1 to 3, characterised in that the strip (50) is a double-sided adhesive strip.

5. Process according to one of the preceding claims, characterised in that the elastic joint is a tubular joint.

6. Process according to claim 5, characterised in that, during step b, the inside (3) of the tubular joint (1) is put under pressure so as to avoid any flattening of the tubular joint (1) in said zone forming a curve (14).

7. Process according to one of the preceding claims, characterised in that said region of the elastic joint (1) is a lip (5).

8. Process according to claim 7, characterised in that, during step b, the joint (1) is held by said lip (5) in a device which produces said local cooling of the strip (50).

9. Process according to claim 8, characterised in that said holding is effected by moving the lip (5) away from the rest of the elastic joint (1) in said zone forming a curve (14).

10. Process according to one of the preceding claims, characterised in that it comprises, after step b, a step c of cooling the joint (1) by the circulation of a fluid.

11. Apparatus for carrying out the process according to one of the preceding claims, characterised in that it comprises:
a pair of heating jaws (11, 12) which enable a zone (14) of an elastic joint (1) to be shaped in a curve and to be given a permanent deformation by heating for a specified period,
a cooling device (30) in thermal contact with a strip (50) with which a region (5) of the elastic joint (1) is covered, and adapted to keep said strip (50) at a temperature below the degradation temperature.

12. Apparatus according to claim 11, characterised in that the elastic joint (1) is a tubular joint and in that it comprises means for putting the inside (3) of the elastic joint (1) under pressure so as to press the outside of the elastic joint (1) against the inner walls of the heating jaws (11, 12) in said zone.

13. Apparatus according to one of claims 11 and 12, characterised in that the joint (1) comprises a lip (5) and in that the cooling device comprises two parts (32, 33) pressed against each other, one of which comprises a cooling circuit (34) adjoining the strip (50) and the other of which comprises an extension (39) which is accommodated between the lip (5) and the rest of said zone (14) of the elastic joint (1).

14. Apparatus according to one of claims 11 to 13, characterised in that it comprises means for circulating a cooling fluid capable of cooling the joint (1) subsequent to the action of the heating jaws (11, 12).

## Patentansprüche

1. Verfahren zum Herstellen eines Dichtungselementes mit einer gummielastischen Dichtung (1) aus einem ersten Material und einem ein Gebiet der Dichtung abdeckenden Band (50), wobei das Band (50) ein zweites Material enthält, das sich vom ersten Material unterscheidet, das zweite Material eine niedrigere Degradationstemperatur aufweist, als die Temperatur, bei der das erste Material bearbeitet werden muß, um der gummielastischen Dichtung (1) zumindest in einem eine Kurve bildenden Bereich eine dauerhafte Form zu geben, dadurch gekennzeichnet, daß es die folgenden Schritte umfaßt:
a) anbringen des Bandes (50) auf dem Gebiet (5) der gummielastischen Dichtung (1),
b) dauerhaft den eine Kurve bildenden Bereich (14) durch Erhitzen der gummielastischen Dichtung (1) in dem Bereich während einer bestimmten Zeit deformieren und dabei lokal das Band (50) kühlen, um es unter seiner Degradationstemperatur zu halten.

2. Verfahren nach Anspruch 1, dadurch gekennzeichnet, daß die gummielastische Dichtung (1) durch Extrudieren hergestellt wird und daß es zwischen Schritt a und Schritt b einen Zwischenschritt a' aufweist, in dem das Dichtungselement (50) in einer gegebenen Länge abgeschnitten wird.

3. Verfahren nach einem der Ansprüche 1 oder 2, dadurch gekennzeichnet, daß das erste Material ein vernetztes Elastomer ist, wie z.B. EPDM, das vor dem Schritt a vulkanisiert wird.

4. Verfahren nach einem der Ansprüche 1 bis 3, dadurch gekennzeichnet, daß das Band (50) ein zweiseitiges Klebeband ist.

5. Verfahren nach einem der vorangegangenen Ansprüche, dadurch gekennzeichnet, daß die gummielastische Dichtung (1) eine röhrenförmige Dichtung ist.

6. Verfahren nach Anspruch 5, dadurch gekennzeichnet, daß bei Schritt b das Innere (3) der röhrenförmigen Dichtung (1) unter Druck gesetzt wird, um ein Abflachen der röhrenförmigen Dichtung (1) in dem eine Kurve bildenden Bereich (14) zu verhindern.

7. Verfahren nach einem der vorangegangenen Ansprüche, dadurch gekennzeichnet, daß das Gebiet der gummielastischen Dichtung (1) eine Lippe (5) ist.

8. Verfahren nach Anspruch 7, dadurch gekennzeichnet, daß in Schritt b die Dichtung (1) durch die Lippe (5) in einer Vorrichtung gehalten wird, die das lokale Auskühlen des Bandes (50) bewirkt.

9. Verfahren nach Anspruch 8, dadurch gekennzeichnet, daß das Halten dadurch bewirkt wird, daß die Lippe (5) vom Rest der gummielastischen Dichtung (1) in dem die Kurve bildenden Bereich (14) ferngehalten wird.

10. Verfahren nach einem der vorangegangenen Ansprüche, dadurch gekennzeichnet, daß es nach Schritt b einen Schritt c des Auskühlens der Dichtung (1) durch Zirkulieren einer Flüssigkeit beinhaltet.

11. Vorrichtung zur Umsetzung des Verfahrens nach einem der vorangegangenen Ansprüche, dadurch gekennzeichnet, daß sie umfaßt:
- ein Paar Heizbacken (11, 12), durch die ein Bereich (14) der gummielastischen Dichtung (1) zu einer Kurve geformt wird und ihn durch Erhitzen während einer bestimmten Zeit dauerhaft deformiert,
- eine Auskühlvorrichtung (30), die in thermischem Kontakt mit einem Band (50) ist, mit dem ein Gebiet (5) der gummielastischen Dichtung (1) bedeckt ist und die dazu geeignet ist, dieses Band (50) bei einer Temperatur unterhalb seiner Degradationstemperatur zu halten.

12. Vorrichtung gemäß Anspruch 11, dadurch gekennzeichnet, daß die gummielastische Dichtung (1) eine röhrenförmige Dichtung ist und, daß sie ein Mittel beinhaltet, um das Innere (3) der gummielastischen Dichtung (1) unter Druck zu setzen, so daß in dem Bereich das Äußere der gummielastischen Dichtung (1) gegen die Innenwände der Heizbacken (11, 12) gedrückt wird.

13. Vorrichtung nach Anspruch 11 oder 12, dadurch gekennzeichnet, daß die Dichtung (1) eine Lippe aufweist (5) und daß die Auskühlvorrichtung zwei Teile (32, 33) aufweist, die gegeneinander gesetzt sind, von denen das eine einen Kühlkreis (34) nahe bei dem Band (50) hat und das andere eine Verlängerung (39) hat, die sich zwischen der Lippe (5) und dem Rest des Bereichs (14) der gummielastischen Dichtung (1) einfügt.

14. Vorrichtung nach einem der Ansprüche 11 bis 13, dadurch gekennzeichnet, daß sie ein Mittel aufweist, um die Kühlflüssigkeit zirkulieren zu lassen, die dazu geeignet ist, das Auskühlen der Dichtung nach der Tätigkeit der Heizbacken (11, 12) sicherzustellen.
